# FASCICULE DE BREVET EUROPEEN

(11) **EP 0 799 257 B1**
(45) Date de publication et mention de la délivrance du brevet: **21.03.2001**
(21) Numéro de dépôt: 95942763.4
(22) Date de dépôt: 18.12.1995
(51) Int. Cl.: C08F 290/12, C08F 299/00, C08F 8/08, C08F 8/00, C08L 63/00

(54) **COMPOSITION RETICULABLE POUR LE REVETEMENT DE SUBSTRATS ET PROCEDE DE REVETEMENT UTILISANT CETTE COMPOSITION**
VERNETZBARE ZUSAMMENSETZUNGEN FÜR DIE BESCHICHTUNG VON SUBSTRATEN UND VERFAHREN ZUR BESCHICHTUNG MIT DIESEN ZUSAMMENSETZUNGEN
CROSSLINKABLE COMPOSITION FOR COATING SUBSTRATES AND COATING METHOD USING THE SAME

(30) Priorité: 19.12.1994 FR 9415373
(43) Date de publication de la demande: 08.10.1997
(73) Titulaire: CRAY VALLEY SA, 92800 Puteaux (FR)
(72) Inventeur: ASKIENAZY, Anne, F-92600 Asnieres (FR); ZWANENBURG, Rob, F-60550 Verneuil-en-Halatte (FR)
(74) Mandataire: Chaillot, Geneviève
(86) Numéro de dépôt international: FR9501689
(87) Numéro de publication internationale: WO9619510

(56) Documents cités:
- EP-A- 0 346 486
- EP-A- 0 366 333
- US-A- 5 124 234
- US-A- 5 296 334

## Description

La présente invention porte sur une composition réticulable applicable pour le revêtement de substrats, ainsi que sur un procédé de revêtement utilisant cette composition.

Les substrats en question sont des substrats de tous types, aussi bien poreux, comme le bois, que non-poreux, comme le verre, les métaux ou les matières plastiques, et de forme aussi bien plane que comportant des zones en relief et en creux, ou, plus généralement, des formes complexes induisant des zones, dites d'ombre, qui ne peuvent pas être atteintes par une irradiation par lampes UV ou faisceau d'électrons, sous lequel se déplacent les pièces à revêtir. C'est par exemple le cas du bois présentant des pores s'ouvrant à la surface ou de pièces mécaniques complexes, comme des éléments de moteurs.

Les exigences techniques des vernis et revêtements de protection auxquels s'adresse la présente invention sont très diverses et parfois très contraignantes ; ce sont généralement les suivantes :
- excellente adhésion sur les métaux, tels que l'aluminium et l'acier, et sur les matières plastiques, telles que le polycarbonate ;
- excellentes propriétés mécaniques, en particulier de flexibilité, de module et de résistance à la rupture ;
- très bonnes propriétés de mouillage du substrat ;
- bonne capacité de dispersion de pigments organiques et minéraux ;
- bonne adhésion en couche d'interface ;
- excellente adhésion sur les substrats à zones d'ombre, en particulier substrats poreux, tels que le bois, et obtention d'une réticulation complète, sachant que, dans le cas contraire et pour les substrats poreux, les monomères restants peuvent, au cours du temps, s'exsuder à la surface du revêtement, avec notamment l'inconvénient de procurer une odeur désagréable ;
- excellente adhésion sur tous types de substrats de formes complexes, même dans les zones d'ombre.

On n'est jamais parvenu jusqu'ici à satisfaire de façon simple, économique et respectueuse de l'environnement un niveau élevé de ces exigences, et, en particulier, à obtenir, sur des revêtements appliqués sur les substrats comportant des zones d'ombre, une dureté de la partie du revêtement de la zone d'ombre, laquelle peut, comme on l'a indiqué, comporter des zones épaisses, dans lesquelles la réticulation sous l'effet d'une irradiation s'avère difficile.

On connaît, par la demande de brevet JP-A-62/158710, une composition photoréticulable utile notamment pour la fabrication d'encres, comprenant :
(a) 100 parties en poids d'un mélange constitué de
   (1) 40 à 80% en poids d'un copolymère modifié obtenu par ouverture de cycle de 10 à 100% des cycles anhydride d'un copolymère anhydride maléique-hydrocarbure insaturé par un (méth)acrylate d'hydroxyalkylène ; et
   (2) 20 à 60% en poids d'un copolymère modifié préparé par ouverture de cycle de 50 à 100% des cycles anhydride d'un copolymère anhydride maléique-hydrocarbure insaturé par un composé saturé contenant un groupe hydroxyle ;
(b) de 5 à 40 parties en poids d'une résine obtenue par ouverture de cycle de 0 à 70% des cycles époxy d'une résine phénolique époxydée par l'acide (méth)acrylique ;
(c) de 5 à 100 parties en poids de monomères photopolymérisables ; et
(d) de 0,5 à 15 parties en poids de photoinitiateurs.

On connaît par la demande de brevet JP-A-63/205649, une composition liquide photosensible, utile comme masque de soudure pour circuits imprimés, comprenant :
- 100 parties en poids du mélange d'un ester (a) obtenu par réaction d'un copolymère formé d'au moins 10% en moles d'anhydride maléique et d'au plus 90% en moles de monomère polymérisable par voie radicalaire avec 0,05 à 0,95 mole, par mole d'anhydride, d'alcool et/ou d'époxyde monovalent polymérisable par voie radicalaire et d'un époxyde (b) choisi parmi l'éther diglycidylique du bisphénol et les résines époxydées de type crésol-novolaque ou phénol-novolaque ;
- de 10 à 200 parties en poids d'un composé polymérisable par voie radicalaire ne comportant pas de groupe époxy ; et
- un solvant organique.

Parmi les alcools monovalents pouvant entrer dans la composition de l'ester (a), sont cités les hydroxyalkyl (méth)acrylates. Parmi les époxydes monovalents pouvant entrer dans la composition de l'ester (a), sont cités le (méth)acrylate de glycidyle, l'allyl glycidyl éther et le monoépoxyde de cyclohexènevinyle.

On connaît déjà, par le brevet US-A-5 114 830, une composition réticulable sous l'effet d'un rayonnement, comprenant de 15 à 40% en poids d'un ester partiel d'un (méth)acrylate d'hydroxyalkyle et d'un copolymère styrène-anhydride maléique, de 2 à 15% d'un monomère (méth)acrylate multifonctionnel, de 3 à 12% d'un photoinitiateur et de 10 à 35% en poids d'un époxyde multifonctionnel. Cette composition, destinée aux masques de soudure réticulés pour circuits imprimés, permet de résoudre les problèmes techniques précédemment attribués à l'étape de post-cuisson (réticulation thermique) qui suit la réticulation par irradiation. En effet, durant l'étape de cuisson (à une température de 130° à 170°C), une partie substantielle des groupes (méth)acrylate d'hydroxyalkyle se dissocie du polymère, régénérant ainsi des groupes anhydrides maléique qui peuvent réagir avec l'époxyde multifonctionnel pour effectuer une réticulation nouvelle et plus stable du photopolymère. On assiste alors vraisemblablement à la formation d'un réseau interpénétré de poly(méth)acrylate, d'une part, et de copolymère styrène-anhydride maléique greffé par l'époxyde, d'autre part.

On connaît par le brevet US-A-5 296 334, une composition photoréticulable comprenant (a) 5 à 50% en poids d'un copolymère styrène-anhydride maléique estérifié ayant moins de 15% d'anhydride libre, dans lequel au moins 50% des groupes anhydride sont estérifiés par un (méth)acrylate d'hydroxyalkyle et au moins 0,1% des groupes anhydride sont estérifiés par un alcool monovalent, (b) 5 à 20% en poids d'un monomère (méth)acrylate multifonctionnel, (c) 1 à 30% en poids d'un époxyde multifonctionnel et (d) 1 à 15% en poids d'un photoinitiateur. Cette composition procure un masque de soudure pour circuits imprimés après une pré-cuisson à une température de 49° à 77°C, suivie d'une exposition à un rayonnement de haute énergie, suivie d'une post-cuisson à une température de 121° à 160°C pendant 5 minutes à 2 heures. Dans cette technologie, l'exposition au rayonnement conduit à une réaction entre les groupes (méth)acrylate du copolymère (a) et les groupes (méth)acrylate du monomère (b).

On a maintenant trouvé qu'en faisant réagir de manière différente les ingrédients des compositions des brevets US-A-5 114 830 et 5 296 334 avec, en outre, un catalyseur approprié, on peut former des vernis et revêtements de protection utilisables sur une grande variété de substrats dans des applications dont les exigences techniques, indiquées ci-dessus, sont différentes de celles (résistance thermique, résistance chimique aux solvants et aux acides utilisés en soudure, adhésion sur cuivre, stabilité dans des conditions de forte humidité) des masques de soudure pour circuits imprimés.

Un premier objet de la présente invention consiste en une composition réticulable comprenant :
(A) un copolymère modifié qui est un ester partiel d'un copolymère styrène - anhydride carboxylique, d'un (méth)acrylate d'hydroxyalkyle et, le cas échéant, d'un alcool monovalent ;
(B) au moins un diluant dudit copolymère modifié ;
(C) au moins un époxyde multifonctionnel ;
(D) un photoinitiateur ou un système capable d'initier la photopolymérisation, caractérisée par le fait qu'elle comprend en outre :
(E) au moins un catalyseur de la réaction entre des fonctions acide carboxylique et des fonctions époxy.

### (A) Copolymère modifié

Le copolymère styrène-anhydride carboxylique de base, utile pour former le composant (A) de la composition réticulable selon l'invention, possède, de préférence, un poids moléculaire moyen en nombre compris entre 500 et 4000 ; il est généralement de type alterné, et il possède, de préférence, un rapport en moles du styrène à l'anhydride carboxylique compris entre 1 et 4 environ.

Comme exemples d'anhydrides carboxyliques insaturés entrant dans la composition du copolymère styrène-anhydride carboxylique de base, on peut citer les anhydrides des acides maléique, itaconique, citraconique, en particulier l'anhydride maléique.

Le (méth)acrylate d'hydroxyalkyle utile pour modifier le copolymère styrène - anhydride carboxylique de base est, de préférence, un acrylate ou méthacrylate dont la partie hydrocarbonée du groupe hydroxyalkyle possède de 2 à 12 atomes de carbone, tels que ceux d'hydroxyéthyle, d'hydroxypropyle, d'hydroxybutyle ou de tétrapropylèneglycol.

Comme exemples d'alcools monovalents pouvant le cas échéant être utiles pour modifier le copolymère styrène - anhydride carboxylique de base, on peut citer des alcools aliphatiques à chaîne courte (de 1 à 6 atomes de carbone) tels que le méthanol, l'éthanol, le propanol, le butanol et le l-méthoxy-2-propanol, ainsi que des alcools aliphatiques à chaîne longue (de 7 à 22 atomes de carbone), tels que l'alcool stéarique.

Pour la bonne efficacité de la compositions réticulable selon l'invention, il est préférable que le rapport en moles du (méth)acrylate d'hydroxyalkyle aux fonctions anhydride carboxylique présentes dans le copolymère styrène-anhydride carboxylique ne dépasse pas 1.

### (B) Diluant du copolymère modifié

Le diluant du copolymère modifié présent dans la composition réticulable selon l'invention peut être soit un diluant non réactif du type alcool léger (comme le méthoxypropanol) ou bien ester saturé (comme l'acétate de butyle), soit un diluant réactif tel qu'un (méth)acrylate multifonctionnel, et plus particulièrement un poly(méth)acrylate de polyol, comme les diacrylates et diméthacrylates de l'éthylèneglycol, du propylèneglycol, du 1,3-butanediol, du 1,4-butanediol, du 1,6-hexane-diol, du néopentyl-glycol, du 1,4-cyclo-hexane-diol, du 1,4-cyclo-hexane-diméthanol, du 2,2,4-triméthyl-1,3-pentanediol, du 2-éthyl-2-méthyl-1,3-propanediol, du 2,2-diéthyl-1,3-propanediol, du diéthylèneglycol, du dipropylèneglycol, du triéthylèneglycol, du tripropylèneglycol, du tétraéthylène-glycol, du tétrapropylèneglycol, du triméthyloléthane, du triméthylolpropane, du glycérol, du pentaérythritol, les triacrylates et triméthacrylates du triméthyloléthane, du triméthylolpropane, du glycérol, du pentaérythritol, les tétraacrylates et tétraméthacrylates du pentaérythritol, les di(méth)acrylates à hexa(méth)acrylates du dipenta-érythritol, les poly(méth)acrylates de polyols mono- ou polyéthoxylés ou mono- ou polypropoxylés, tels que le triacrylate et le triméthacrylate du triméthylolpropane triéthoxylé, du triméthylolpropane tripropoxylé, le triacrylate et le triméthacrylate du glycérol tripropoxylé, le triacrylate, le triméthacrylate, le tétraacrylate et le tétraméthacrylate du pentaérythritol tétraéthoxylé, et leurs mélanges en toutes proportions. Parmi ceux-ci, on préfère ceux ayant pour effet d'abaisser la viscosité de la composition, tels que notamment le triacrylate de triméthylolpropane éthoxylé et les diacrylates de polyéthylène glycol.

La proportion de diluant dans la composition réticulable selon l'invention est comprise entre 5% et 200% en poids, de préférence entre 25 et 100% en poids, par rapport à la somme des composants (A) + (C), selon la viscosité souhaitée pour la composition finale et la nature du diluant et de l'époxyde multifonctionnel employés.

### (C) Epoxyde multifonctionnel

L'époxyde multifonctionnel utilisé dans la composition réticulable selon l'invention possède au moins deux fonctions époxydes. On peut citer plus particulièrement les résines diépoxydées :
- de type cycloaliphatique, comme, par exemple, celles contenant un groupe oxyde de cyclohexène, oxyde de tricyclodécène ou oxyde de cyclopentène, le 3,4-époxycyclohexyl méthyl-3',4' époxy cyclohexane, le 3,4-époxycyclohexane-carboxylate de 3,4-époxycyclohexylméthyle, le dioxyde de vinylcyclohexène, le 2,2-bis (3,4-époxycyclohexyl) propane, le bis (2,3-époxycyclopentyl) éther, le 2-(3,4-époxy) cyclohexane-5,5-spiro (3,4-époxy)-cyclohexane-m-dioxane et l'adipate de bis-(3,4-époxy-6-méthyl-cyclohexyle) ;
- de type aliphatique, comme, par exemple, le diépoxyde de butadiène et les diépoxydes de polyglycols de formule générale : 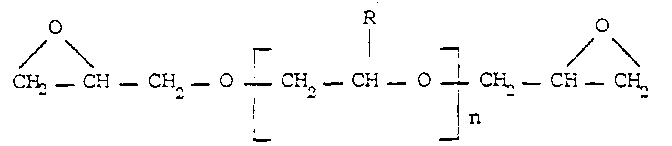 dans laquelle R est choisi parmi l'atome d'hydrogène et le radical méthyle et n est un nombre entier allant de 1 à 15 ; et
- de type aromatique, comme, par exemple, le diglycidyl éther de bisphénol A, le diglycidyl éther de bisphénol F, le diglycidyl éther de bisphénol A éthoxylé.

Pour la mise en oeuvre de l'invention, on peut aussi utiliser des résines triépoxydées aliphatiques comme, par exemple, l'éther triglycidylique du glycérol et l'éther triglycidylique du triméthylolpropane et des résines tétraépoxydées comme par exemple le tétraglycidylbisaminométhylcyclohexane, ainsi que des résines multiépoxydées, comme, par exemple, les époxy novolaque.

Pour la bonne efficacité de la composition réticulable selon l'invention, il est préférable que le rapport en moles des fonctions acides carboxylique du copolymère modifié, c'est-à-dire partiellement estérifié, (A), aux fonctions époxy de l'époxyde multifonctionnel (C) soit compris entre 0,3 et 2.

### (D) Photoinitiateur ou système capable d'initier la photopolymérisation

Le photoinitiateur utilisé dans la composition réticulable selon l'invention peut être tout composé capable de générer des radicaux libres sous l'effet du rayonnement ultraviolet.

On peut citer à titre d'exemples :
- les α-dicétones, comme le benzile et le diacétyle ;
- les acyloïnes, comme la benzoïne ;
- les acyloïn éthers, comme le benzoïn méthyl éther, le benzoïn éthyl éther, le benzoïn isopropyl éther et le benzoïn isobutyl éther ;
- les thioxanthones, comme la thioxanthone, la 2,4-diéthylthioxanthone, l'acide thioxanthone-1-sulfonique, l'isopropyl-thioxanthone-4 sulfonique, l'isopropylthioxanthone et la 2-chlorothioxanthone ;
- les benzophénones, comme la benzophénone, la 4,4-bis(diméthylamino)benzophénone, la 4,4'-bis(diéthylamino)benzophénone, la 4,4'-diéthylaminobenzophénone, la cétone de Mischler ;
- les propiophénones, comme la 2-hydroxy-2-méthylpropiophénone, la 4'-isopropyl-2-hydroxy-2-méthyl-propiophénone ;
- les acétophénones, comme l'acétophénone, la p-diméthyl-aminoacétophénone, l'α,α'-diméthoxyacétoxyacétophénone, la 2,2-diméthoxy-2-phénylacétophénone, la p-méthoxy-acétophénone, la 2-méthyl-[4-(méthylthio)phényl]-2-morpholino-1-propanone, la 2,2-diéthoxyacétophénone, la 4 '-phénoxy-2,2-dichloroacétophénone, la 2-benzyl-2-N,N-diméthylamino-1-(4-morpholinophényl) -butanone-1, la 2,2-diméthoxy-2-phényl-acétophénone, la 2-hydroxy-2-méthyl-1-phénylpropanone ;
- les quinones, comme l'anthraquinone, la 2-éthyl-anthraquinone, la 2-chloroanthraquinone, la 1,4-naphto-quinone ;
- les alpha-hydroxyarylcétones, comme la 1-hydroxycyclohexyl phényl cétone ;
- les composés halogénés, tels que le chlorure de phénacyle, la tribromométhylphénylsulfone, la tris(trichlorométhyl)-s-triadine ;
- les peroxydes comme le peroxyde de di-t-butyle ; et
- d'autres composés comme le benzile diméthyl cétal ; le N,N-diméthylaminobenzoate d'isoamyle, le N,N-diméthylaminobenzoate d'éthyle, le benzoïn benzoate, la 2-hydroxy-2-méthyl-l-phényl propanone, l'α-acyloxime ester.

Ces composés peuvent être utilisés soit individuellement en tant que photoinitiateur, soit sous la forme d'un mélange d'au moins deux d'entre eux en tant que système photoinitiateur. Par ailleurs, à l'initiateur ou au système photoinitiateur, peut être associé au moins un agent photoactivateur.

La proportion de photoinitiateur ou de système photoinitiateur dans la composition réticulable selon l'invention est par exemple comprise entre 2 et 15% de préférence entre 3 et 9%, par rapport au poids de la somme des composants (A) + (C).

### (E) Catalyseur selon l'invention

Le catalyseur de la réaction entre les fonctions acide carboxylique du copolymère modifié et les fonctions époxy de l'époxyde multifonctionnel peut être notamment choisi parmi les amines tertiaires, les bétaïnes, les acétates d'onium organiques, l'acétate de chrome triphénylphosphite et les sels quaternaires d'amines tertiaires.

La proportion du catalyseur dans la composition réticulable selon l'invention est par exemple comprise entre 1 et 10% en poids, de préférence entre 1,5 et 7% en poids, par rapport à la somme des composants (A) + (C).

### Autres additifs

La composition réticulable selon l'invention peut en outre comprendre, en vue de certaines applications particulières, des additifs tels que :
- pigments minéraux, comme le dioxyde de titane, les oxydes de fer, le noir de carbone, ou organiques comme le bleu de phtalocyanine de cuivre, le rouge de /3-naphtol, les jaunes azoïques et le violet de dioxazinc, ces pigments pouvant être utilisés à raison de 0,5 à 40% en poids par rapport à la somme des composants (A) + (C) ;
- cires polymères, pouvant être utilisées à raison de 0,5 à 10% en poids par rapport à la somme des composants (A) + (C) ;
- charges minérales pulvérulentes, telles que talc, silice, carbonate de calcium, ces charges pouvant être utilisées à raison de 2 à 40% en poids par rapport à la somme des composants (A) + (C).

Les compositions réticulables selon l'invention sont utiles pour être déposées en couche sur la surface d'un substrat et être amenées à réticuler pour protéger ledit substrat contre, par exemple, l'oxydation et/ou l'humidité, la rayure, ou bien à des fins décoratives.

La réticulation des compositions selon l'invention est une double réticulation :
① par voie radicalaire du copolymère (A) sur lui-même ou avec le diluant (B) si celui-ci est réactif en présence du photoinitiateur ou système photoinitiateur (D) ; et
② par réaction des groupes acide carboxylique du copolymère (A) avec les groupes époxy du composant (C) en présence du catalyseur (E).

La réticulation ① doit s'effectuer par irradiation.

L'originalité de la présente invention est que pour assurer la réticulation ②, grâce à la présence du catalyseur (E) , on peut aller jusqu'à se passer d'un chauffage si bien qu'il n'y a pas dissociation du (méth)acrylate d'alkyle d'avec le copolymère styrène-anhydride carboxylique, ou bien on peut assurer des conditions de chauffage (température, durée) telles qu'il n'y a pas non plus dissociation du (méth)acrylate d'alkyle d'avec le copolymère styrène - anhydride carboxylique, contrairement aux compositions selon US-A-5 296 334 et EP-0 366 333. Les groupes (méth)acrylate d'hydroxyalkyle n'étant pas dissociés du copolymère styrène - anhydride carboxylique, celui-ci porte donc ses groupes acide carboxylique comme seuls groupes disponibles pour une réaction avec l'époxyde multifonctionnel. Dans ces conditions, on formera toujours un unique réseau polymère, assurant la dureté recherchée pour les applications de l'invention.

Ainsi, un deuxième objet de la présente invention consiste en un procédé de revêtement de substrats consistant à appliquer sur un substrat une couche de la composition réticulable décrite précédemment, puis, le cas échéant, à soumettre le substrat revêtu à une étape de réticulation thermique, et à soumettre ensuite celui-ci à une étape de réticulation par irradiation.

Comme substrats pouvant être soumis au procédé de revêtement selon l'invention, on peut citer un grand nombre de substrats poreux et non poreux tels que notamment :
- des métaux, comme le fer, l'acier, les aciers spéciaux, le zinc, l'aluminium.
- des matières plastiques et résines synthétiques telles que les polyoléfines, le polycarbonate, le polystyrène, le polyéthylène téréphtalate, le poly(chlorure de vinyle) et les résines acrylonitrile-butadiène-styrène ;
- des matériaux naturels, tels que le bois et le caoutchouc, et synthétiques, tels que des stratifiés de résine mélamine-formol, des agglomérés.

Dans le cadre du procédé selon l'invention, la couche de composition réticulable est appliquée sous forme de revêtement mince à semi-épais, allant d'une épaisseur de 2 µm à 5 mm. L'application de la composition réticulable sur le substrat peut être effectuée par toute méthode connue telle que pistolet, cylindre, rideau.

L'étape éventuelle de réticulation thermique est effectuée par exemple à une température de 80° à 150°C, de préférence 90° à 120°C, pendant une durée d'au moins 15 secondes et le plus souvent ne dépassant pas 10 minutes , cette durée étant d'autant plus longue que la température est moins élevée et que le catalyseur (E) est présent en moins grande proportion. La réticulation thermique peut être effectuée, de manière connue en soi, dans un four à convection ou bien dans un four à infrarouge.

Enfin, pour l'étape de réticulation par irradiation, connue en soi, toute source de radiation à haute énergie peut être utilisée, telle que, par exemple, le faisceau d'électrons ou bien le rayonnement ultraviolet tel qu'obtenu par exemple au moyen d'une lampe à mercure.

Dans le cas où l'on conduit une réticulation en prévoyant une étape de chauffage précédant l'étape d'irradiation, on obtient une composition réticulée, caractérisée par le fait qu'elle comprend un réseau unique formé, sur toute l'épaisseur dudit revêtement, par le copolymère styrène - anhydride carboxylique partiellement estérifié (A), lequel, dans le réseau, s'est maintenu sans dissociation de ses groupes (méth)acrylate d'hydroxyalkyle, et a eu ses groupes acide carboxylique qui ont réagi avec les groupes époxy du composant (C) en présence du catalyseur (E), ledit copolymère (A) ayant également été soumis en présence du photoinitiateur ou du système photoinitiateur (D) à une réticulation par voie radicalaire sur lui-même et/ou avec le diluant (B) si celui-ci est réactif.

Dans le cas où l'on ne prévoit pas d'étape de chauffage précédant l'étape d'irradiation, on obtient une composition réticulée, dans laquelle, dans toutes les parties irradiées, le copolymère (A) a été soumis majoritairement, en présence du photoinitiateur ou du système photoinitiateur (D), à une réticulation par voie radicalaire sur lui-même et/ou avec le diluant (B) si celui-ci est réactif, et, dans les zones d'ombre, le copolymère (A) a été soumis majoritairement, en présence du catalyseur (E) à une réticulation par réaction de ses groupes acide carboxylique avec les groupes époxy du composant (C). Le réseau est ici également un réseau unique, le copolymère (A) ne s'étant pas non plus dissocié.

On voit donc que la réticulation est, dans tous les cas, complète, si bien que l'on peut dire que l'invention permet en particulier de résoudre le problème de la formation de revêtements protecteurs et/ou décoratifs sur des substrats présentant des zones d'ombre, avec l'avantage supplémentaire que l'on peut ne pas chauffer le substrat. Il n'est donc pas nécessaire de disposer d'un four pour chauffer le substrat revêtu, ce qui peut avoir un intérêt au plan économique. On obtiendra un réseau qui ne sera pas du même type selon que la zone recouverte sera une zone d'ombre ou non (ex fond des pores du bois), mais on peut cependant être certain que la réticulation sera effectuée partout, sans risque d'exsudation ultérieure de monomères dans le cas du bois poreux.

Compte tenu des substrats évoqués ci-dessus, le procédé selon l'invention trouvera avantageusement des applications dans l'industrie automobile pour le revêtement protecteur de pièces sous capot, ainsi que dans l'industrie de l'ameublement et de la décoration intérieure, et dans le domaine des revêtements de sols.

Les exemples ci-après sont fournis à titre illustratif et non limitatif de la présente invention. Dans ces exemples, les parties et les pourcentages sont donnés en poids. Les parties sont données pour un total de 100 parties et les pourcentages sont relatifs à ces 100 parties. Les composés de la série "SR" mis en oeuvre dans ces exemples sont commercialisés par la Société CRAY VALLEY, et ceux de la série "SARBOX", par la Société SARTOMER.

### EXEMPLE 1

Une composition réticulable est préparée par mélange de :
- 58,8 parties d'une résine diépoxyde de polyglycol commercialisée par la Société DOW CHEMICAL sous la désignation "DER 732" ;
- 41,2 parties d'une résine styrène-anhydride maléique modifiée par estérification partielle par le méthacrylate d'hydroxyéthyle ;
   - 27,5% de diluant diacrylate de polyéthylène glycol (Mw = 400), la résine styrène - anhydride maléique précitée étant commercialisée en mélange avec le diluant sous la désignation SARBOX® SB-500K60 ;
   - 1,6% de tri(diméthylaminométhyl)phénol commercialisé par la Société CRAY VALLEY LTD sous la désignation SYNOLIDE® 968 ; et
   - 3,3% de 2-benzyl-2-diméthylamino-1-(4-morpholinophényl)-butanone-1 commercialisé par la Société CIBA-GEIGY sous la désignation IRGACURE® 369.

La composition réticulable ainsi obtenue est alors appliquée sur les substrats suivants ; acier non traitée et caoutchouc, au moyen d'un pistolet, sous forme de revêtement d'épaisseur 25 µm environ, puis elle est soumise à une étape de réticulation à 100°C pendant 2 minutes et enfin à une étape d'irradiation par rayonnement ultraviolet au moyen d'une lampe au mercure, à une vitesse de 4 m/min et sous une puissance de lampe de 120 watt/cm.

L'adhésion du revêtement réticulé ainsi obtenu sur tous les substrats expérimentés est excellente.

### EXEMPLE 2

Une composition réticulable est préparée par un mélange de :
- 37,5 parties de 3,4-époxycyclohexyl méthyl-3',4'-époxycyclohexane, commercialisé par la Société UNION CARBIDE sous la désignation "UVR 6110" ;
- 62,5 parties d'une résine styrène - anhydride maléique modifiée par estérification partielle par le méthacrylate d'hydroxyéthyle ;
   - 72% d'un diluant formé de :
      - 9,4% de triacrylate acide promoteur d'adhérence, commercialisé sous la désignation "SR 9051" ; et
      - 62,6% de triméthylolpropane triacrylate éthoxylé, commercialisé sous la désignation "SR 454", la résine modifiée styrène-anhydride maléique précitée étant commercialisée en mélange avec le diluant "SR454" sous la désignation SARBOX® SB-500E50 ;
   - 6,2% de chlorure de benzyltriméthylammonium ;
   - 9% de 2-hydroxy-2-méthyl-1-phényl-propanone-1 commercialisée par la Société CIBA-GEIGY sous la désignation "DAROCUR D1173".

Le rapport COOH/époxy est de 0,5.

La composition ci-dessus est appliquée sur un substrat de verre, au moyen d'un cylindre, sous forme d'un revêtement d'épaisseur 36 µm, puis soumise à une étape de réticulation à 100°C pendant 10 minutes, et enfin à une étape d'irradiation par rayonnement ultraviolet au moyen d'une lampe au mercure. Le revêtement obtenu était dur à la sortie de la machine.

La même composition a été appliquée, au moyen d'un cylindre, sur un substrat de bois dans lequel on avait pratiqué une succession de cavités de profondeur croissante, allant jusqu'à 4 mm. Le revêtement formé, remplissant les cavités, avait une épaisseur de 36 µm sur la surface du substrat. On a soumis ce dernier à une étape de réticulation à 100°C pendant 10 minutes, puis à une étape d'irradiation par rayonnement ultraviolet au moyen d'une lampe au mercure, à une vitesse de 8 m/min et sous une puissance de lampe de 120 watt/cm. Le revêtement obtenu était dur en surface à la sortie et il était polymérisé jusqu'à une profondeur de 4 mm.

La même composition a été appliquée dans les mêmes conditions, soumise à une étape d'irradiation (8 m/min-120 watt/cm), puis laissée à température ambiante pendant quelques jours. Le revêtement obtenu est dur en surface et polymérisé jusqu'à une profondeur de 4 mm.

### EXEMPLE 3

Une composition réticulable est préparée par mélange de :
- 50 parties de diglycidyl éther de bisphénol A, commercialisé par la Société DOW CHEMICAL sous la désignation "DER 331" ;
- 50 parties d'une résine styrène - anhydride maléique modifiée par estérification partielle par le méthacrylate d'hydroxyéthyle ;
   - 72,6% d'un diluant formé de :
      - 7,6% de triacrylate acide promoteur d'adhérence, commercialisé par la Société CRAY VALLEY sous la désignation "SR 9051" ;
      - 15% d'hexanediol 1,6-diacrylate, commercialisé sous la désignation "SR 238" ;
         et
      - 50% de diluant réactif triméthylopropane triacrylate éthoxylé, commercialisé sous la désignation "SR454",
   la résine modifiée styrène - anhydride maléique précitée étant commercialisée en mélange avec le diluant "SR454" sous la désignation "SARBOX® SB-500E50".
   - 5% de chlorure de benzyltriméthylammonium ;
   - 7,6% de 2-hydroxy-2-méthyl-1-phényl-propanone-1, commercialisé par la Société CIBA GEIGY sous la dénomination "DAROCUR D1173".

Le rapport COOH/époxy est de 0,5.

Appliquée dans les mêmes conditions qu'à l'Exemple 2, cette composition réticulable a donné les mêmes résultats.

## Revendications

1. Composition réticulable comprenant :
(A) un copolymère modifié qui est un ester partiel d'un copolymère styrène - anhydride carboxylique, d'un (méth)acrylate d'hydroxyalkyle et, le cas échéant, d'un alcool monovalent ;
(B) au moins un diluant dudit copolymère modifié ;
(C) au moins un époxyde multifonctionnel ;
(D) un photoinitiateur ou un système capable d'initier la photopolymérisation,
caractérisée par le fait qu'elle comprend en outre :
(E) au moins un catalyseur de la réaction entre des fonctions acide carboxylique et des fonctions époxy.

2. Composition réticulable selon la revendication 1, caractérisée en ce que le copolymère styrène-anhydride carboxylique utile pour former le composant (A) possède un poids moléculaire moyen en nombre compris entre 500 et 4000 et un rapport en moles du styrène à l'anhydride carboxylique compris entre 1 et 4.

3. Composition réticulable selon l'une des revendications 1 et 2, caractérisée en ce que l'alcool monovalent utilisable pour modifier le copolymère styrène-anhydride carboxylique est choisi parmi les alcools aliphatiques dont la chaîne possède de 1 à 22 atomes de carbone.

4. Composition réticulable selon l'une des revendications 1 à 3, caractérisée en ce que l'époxyde multifonctionnel (C) est choisi parmi les résines diépoxydées cycloaliphatiques, aliphatiques et aromatiques, les résines triépoxydées aliphatiques et les résines tétraépoxydées, ainsi que les résines multiépoxydées.

5. Composition réticulable selon l'une des revendications 1 à 4, caractérisée en ce que le rapport en moles du (méth)acrylate d'hydroxyalkyle aux fonctions anhydride carboxylique présentes dans le copolymère styrène-anhydride carboxylique ne dépasse pas 1.

6. Composition réticulable selon l'une des revendications 1 à 5, caractérisée en ce que le rapport en moles des fonctions acide carboxylique du copolymère partiellement estérifié aux fonctions époxy de l'époxyde multifonctionnel est compris entre 0,3 et 2.

7. Composition réticulable selon l'une des revendications 1 à 6, caractérisée en ce que la proportion de diluant est comprise entre 5% et 200% en poids de la somme des composants (A) + (C).

8. Composition réticulable selon l'une des revendications 1 à 7, caractérisée en ce que le photoinitiateur ou système photoinitiateur est présent à raison de 2 à 15% du poids de la somme des composants (A) + (C).

9. Composition réticulable selon l'une des revendications 1 à 8, caractérisée en ce que le catalyseur (E) de la réaction entre les fonctions acide carboxylique du copolymère modifié (A) et les fonctions époxy de l'époxyde multifonctionnel (C) est choisi parmi les amines tertiaires, les bétaïnes, les acétates d'onium organiques, l'acétate de chrome triphénylphosphite, et les sels quaternaires d'amines tertiaires.

10. Composition réticulable selon l'une des revendications 1 à 9, caractérisée en ce que le catalyseur est présent à raison de 1 à 10% en poids, par rapport à la somme des composants (A) + (C).

11. Composition réticulable selon l'une des revendications 1 à 10, caractérisée en ce qu'elle comprend en outre au moins un additif choisi parmi les pigments minéraux ou organiques, les cires polymères et les charges minérales pulvérulentes.

12. Procédé de revêtement de substrats, caractérisé par le fait qu'il consiste à appliquer sur un substrat une couche d'une composition réticulable telle que définie à l'une des revendications 1 à 11, puis, le cas échéant, à soumettre le substrat revêtu à une étape de réticulation thermique, et à soumettre ensuite celui-ci à une étape de réticulation par irradiation.

13. Procédé de revêtement de substrats selon la revendication 12, caractérisé par le fait qu'il consiste à appliquer sur un substrat une couche d'une composition réticulable telle que définie à l'une des revendications 1 à 11, puis à soumettre le substrat revêtu à une étape de réticulation par irradiation.

14. Procédé de revêtement de substrats selon la revendication 12, caractérisé en ce que l'étape de réticulation thermique est effectuée à une température de 80° à 150°C pendant une durée de 15 secondes à 10 minutes.

15. Procédé selon la revendication 14, caractérisé par le fait que l'étape de réticulation thermique est effectuée à une température de 90 à 120°C.

16. Procédé selon l'une des revendications 12 à 15, applicable au revêtement de substrats comportant des zones d'ombre ou inaccessibles à l'irradiation.

17. Utilisation de la composition réticulable telle que définie à l'une des revendications 1 à 11 pour le revêtement de substrats comportant des zones d'ombre ou inaccessibles à l'irradiation.

## Patentansprüche

1. Vernetzbare Zusammensetzung umfassend:
(A) Ein modifiziertes Copolymer, welches ein Teilester ist eines Styrol-Carbonsäureanhydrid-Copolymeren, eines Hydroxyalkyl-(meth)acrylats und, gegebenenfalls eines einwertigen Alkohols:
(B) mindestens ein Verdünnungsmittel für das genannte modifizierte Copolymer;
(C) mindestens ein multifunktionelles Epoxid;
(D) einen Photoinitiator oder ein System, welches in der Lage ist, die Photopolymerisation zu initiieren,
dadurch gekennzeichnet, daß sie zusätzlich:
(E) Mindestens einen Katalysator für die Reaktion zwischen den Carbonsäurefunktionen und Epoxyfunktionen enthält.

2. Vernetzbare Zusammensetzung nach Anspruch 1, dadurch gekennzeichnet, daß das zur Bildung des Bestandteils (A) geeignete Styrol-Carbonsäureanhydrid-Copolymer ein zahlenmittleres Molekulargewicht zwischen 500 und 4000 und ein Molverhältnis von Styrol zu Carbonsäureanhydrid zwischen 1 und 4 besitzt.

3. Vernetzbare Zusammensetzung nach einem der Ansprüche 1 und 2, dadurch gekennzeichnet, daß der für die Modifizierung des Styrol-Carbonsäureanhydrid-Copolymeren verwendbare einwertige Alkohol ausgewählt ist aus aliphatischen Alkoholen, deren Kette 1 bis 22 Kohlenstoffatome aufweist.

4. Vernetzbare Zusammensetzung nach einem der Ansprüche 1 bis 3, dadurch gekennzeichnet, daß das multifunktionelle Epoxid (C) aus cycloaliphatischen, aliphatischen und aromatischen diepoxydierten Harzen, aliphatischen triepoxydierten Harzen und tetraepoxydierten Harzen sowie vielfach epoxydierten Harzen ausgewählt ist.

5. Vernetzbare Zusammensetzung nach einem der Ansprüche 1 bis 4, dadurch gekennzeichnet, daß das Molverhältnis von Hydroxyalkyl-(meth)acrylat zu den in dem Styrol-Carbonsäureanhydrid-Copolymeren vorhandenen Anhydridfunktionen 1 nicht übersteigt.

6. Vernetzbare Zusammensetzung nach einem der Ansprüche 1 bis 5, dadurch gekennzeichnet, daß das Molverhältnis der Carbonsäurefunktionen des teilweise veresterten Copolymeren zu den Epoxyfunktionen des multifunktionellen Epoxids zwischen 0,3 und 2 liegt.

7. Vernetzbare Zusammensetzungen nach einem der Ansprüche 1 bis 6, dadurch gekennzeichnet, daß der Anteil des Verdünnungsmittels zwischen 5 und 200 Gew.-% bezogen auf die Summe der Bestandteile (A) + (C) beträgt.

8. Vernetzbare Zusammensetzung nach einem der Ansprüche 1 bis 7, dadurch gekennzeichnet, daß der Photoinitiator oder das Photoinitiatorsystem in einer Menge von 2 bis 15% bezogen auf das Gewicht der Summe der Bestandteile (A) + C vorhanden ist.

9. Vernetzbare Zusammensetzung nach einem der Ansprüche 1 bis 8, dadurch gekennzeichnet, daß der Katalysator (E) für die Reaktion zwischen den Carbonsäurefunktionen des modifizierten Copolymers (A) und den Epoxyfunktionen des multifunktionellen Epoxids (C) aus tertiären Aminen, Betainen, organischen Oniumacetaten, Chromacetat-Triphenlyphosphit und quaternären Salzen von tertiären Aminen ausgewählt ist.

10. Vernetzbare Zusammensetzung nach einem der Ansprüche 1 bis 9, dadurch gekennzeichnet, daß der Katalysator in einer Menge von 1 bis 10 Gew.-%, bezogen auf die Summe der Bestandteile (A) + (C) vorhanden ist.

11. Vernetzbare Zusammensetzung nach einem der Ansprüche 1 bis 10, dadurch gekennzeichnet, daß sie zusätzlich mindestens ein Additiv ausgewählt aus anorganischen oder organischen Pigmenten, polymeren Wachsen und pulverförmigen anorganischen Füllstoffen enthält.

12. Verfahren zum Überziehen von Substraten, dadurch gekennzeichnet, daß es darin besteht, auf dem Substrat eine Schicht einer vernetzbaren Zusammensetzung nach einem der Ansprüche 1 bis 11 aufzubringen und dann gegebenenfalls das überzogene Substrat einer Stufe der thermischen Vernetzung zu unterziehen und dieses anschließend einer Stufe der Vernetzung durch Bestrahlung zu unterwerfen.

13. Verfahren zum Überziehen von Substraten nach Anspruch 12, dadurch gekennzeichnet, daß es darin besteht, auf dem Substrat eine Schicht einer vernetzbaren Zusammensetzung nach einem der Ansprüche 1 bis 11 aufzutragen und dann das überzogene Substrat einer Stufe der Vernetzung durch Bestrahlung zu unterwerfen.

14. Verfahren zum Überziehen von Substraten nach Anspruch 12, dadurch gekennzeichnet, daß die Stufe der thermischen Vernetzung bei einer Temperatur von 80°C bis 150°C während einer Zeitdauer von 15 Sekunden bis 10 Minuten durchgeführt wird.

15. Verfahren nach Anspruch 14, dadurch gekennzeichnet, daß die Stufe der thermischen Vernetzung bei einer Temperatur von 90°C bis 120°C durchgeführt wird.

16. Verfahren nach einem der Ansprüche 12 bis 15, anwendbar zum Überziehen von Substraten, welche verdeckte oder für die Strahlung unzugängliche Bereiche aufweisen.

17. Verwendung der vernetzbaren Zusammensetzung nach einem der Ansprüche 1 bis 11 zum Überziehen von Substraten, die verdeckte oder für die Bestrahlung unzugängliche Bereiche aufweisen.

## Claims

1. Crosslinkable composition including :
(A) a modified copolymer which is a partial ester of a styrene-carboxylic anhydride copolymer, of a hydroxyalkyl (meth)acrylate and, where appropriate, of a monovalent alcohol ;
(B) at least one diluent for the said modified copolymer ;
(C) at least one multifunctional epoxide ;
(D) a photoinitiator or a system capable of initiating photopolymerization,
characterized in that it additionally includes :
(E) at least one catalyst of the reaction between carboxylic acid functional groups and epoxy functional groups.

2. Crosslinkable composition according to Claim 1, characterized in that the styrene-carboxylic anhydride copolymer which can be used for forming the component (A) has a number-average molecular weight of between 500 and 4000 and a molar ratio of styrene to the carboxylic anhydride of between 1 and 4.

3. Crosslinkable composition according to either of Claims 1 and 2, characterized in that the monovalent alcohol which can be employed for modifying the styrene-carboxylic anhydride copolymer is chosen from aliphatic alcohols whose chain has from 1 to 22 carbon atoms.

4. Crosslinkable composition according to one of Claims 1 to 3, characterized in that the multifunctional epoxide (C) is chosen from cycloaliphatic, aliphatic and aromatic diepoxidized resins, aliphatic triepoxidized resins and tetraepoxidized resins, as well as multiepoxidized resins.

5. Crosslinkable composition according to one of Claims 1 to 4, characterized in that the molar ratio of the hydroxyalkyl (meth)acrylate to the carboxylic anhydride functional groups present in the styrene-carboxylic anhydride copolymer does not exceed 1.

6. Crosslinkable composition according to one of Claims 1 to 5, characterized in that the molar ratio of the carboxylic acid functional groups of the partially esterified copolymer to the epoxy functional groups of the multifunctional epoxide is between 0.3 and 2.

7. Crosslinkable composition according to one of Claims 1 to 6, characterized in that the proportion of diluent is between 5% and 200% by weight of the sum of the components (A) + (C).

8. Crosslinkable composition according to one of Claims 1 to 7, characterized in that the photoinitiator or photoinitiating system is present in a proportion of 2 to 15% of the weight of the sum of the components (A) + (C).

9. Crosslinkable composition according to one of Claims 1 to 8, characterized in that the catalyst (E) of the reaction between the carboxylic acid functional groups of the modified copolymer (A) and the epoxy functional groups of the multifunctional epoxide (C) is chosen from tertiary amines, betaines, organic onium acetates, triphenylphosphite chromium acetate and quaternary salts of tertiary amines.

10. Crosslinkable composition according to one of Claims 1 to 9, characterized in that the catalyst is present in a proportion of 1 to 10% by weight, relative to the sum of the components (A) + (C).

11. Crosslinkable composition according to one of Claims 1 to 10, characterized in that it additionally includes at least one additive chosen from inorganic or organic pigments, polymer waxes and pulverulent inorganic fillers.

12. Process for coating substrates, characterized in that it consists in applying onto a substrate a layer of a crosslinkable composition as defined in one of Claims 1 to 11 and then, where appropriate, in subjecting the coated substrate to a stage of thermal crosslinking and in subsequently subjecting it to a stage of crosslinking by irradiation.

13. Process for coating substrates according to Claim 12, characterized in that it consists in applying onto a substrate a layer of a crosslinkable composition as defined in one of Claims 1 to 11 and then in subjecting the coated substrate to a stage of crosslinking by irradiation.

14. Process for coating substrates according to Claim 12, characterized in that the thermal crosslinking stage is performed at a temperature of 80° to 150°C for a period of 15 seconds to 10 minutes.

15. Process according to Claim 14, characterized in that the thermal crosslinking stage is performed at a temperature of 20 to 120°C.

16. Process according to one of Claims 12 to 15, which can be applied to the coating of substrates comprising shadow regions or regions inaccessible to irradiation.

17. Use of the crosslinkable composition as defined in one of Claims 1 to 11 for the coating of substrates comprising shadow regions or regions inaccessible to irradiation.
